# EUROPEAN PATENT APPLICATION

(11) **EP 0 985 553 A1**
(43) Date of publication of application: **15.03.2000**
(21) Application number: 99937905.0
(22) Date of filing: 05.03.1999
(51) Int. Cl.: B60B 33/00

(54) **CASTER FOR ROBOT**

(30) Priority: 06.03.1998 JP 9808498
(71) Applicant: Takizawa, Shigeo, Fujisawa-shi, Kanagawa 252-0804 (JP)
(72) Inventor: Takizawa, Shigeo, Fujisawa-shi, Kanagawa 252-0804 (JP)
(74) Representative: Crump, Julian Richard John
(86) International application number: JP9901085
(87) International publication number: WO9944843

(57) **Abstract**

A controllable caster with a sled for running over an obstacle, comprising a wheel (2), a rocking shaft (3e) provided with the wheel (2) thereon, stably supporting legs (4, 12), slidably stabilizing plates (1, 10), friction varying materials (1s) provided on the slidably stabilizing plates (1, 10), a driving device (2w) which rocks the rocking shaft (3e) and changes the angle of the slidably stabilizing plates (1, 10), a rocking shaft inclination angle detection device (2b), a slidably stabilizing plate angle detection device (1f), and a detection device (1Q) for detecting a change in a weight to be applied.

## Description

### Technical Field

This invention is related to the improvement of a caster with the sled for moving over a Surface of varying height under the conditions when use of an existent caster taking the limitation of the size of its wheel to use into the existent caster, when a person moves an object such as a utensil or a structure or when an object such as a utensil or a structure moves, the existent easier cannot be traveled over and can not travel over the obstacle with varying heights along its transit plane, and to the caster with the sled for traveling over obstacles that has higher stability than the existent caster and a brake movement of the wheel of the existent-caster is controlled without braking and the axle which holds a wheel by the mechanism such as a brake, in other words, to the caster for the robot and the caster for the robot with the foot part of the robot walking by the two pairs, because of the caster with the sled for traveling over obstacles can stand on itself, by maintaining stabilization by one caster with the sled for traveling over obstacles or two.

### Background of the technology

So far, when any object, such as a utensil or a structure is moved, there was a caster used as a means that a wheel met the transit plane.

The caster was usually used with more than two wheels because the caster could not secure a load by standing on one wheel or two wheels, and one wheel or two wheels used it when it was based on the use of the centrifugal force.

When the existent caster is not available because of an obstacle in the path of its transit plane, obstacles such as a utensil or a structure are being moved, the existent caster which has a big wheel and the big wheel installed directly in the object were used for traveling over obstacles.

When a big wheel isn't available for the surrounding conditions the existent caster couldn't travel over obstacles with the little wheel.

Though sled friction was high, when it is used under conditions like touching the snow of friction was little, it was hard to use in the building because of frictional resistance with the floor was too high.

When a caster is attached to the robot and used, many little wheels that were set up and continued for securing stability and the form of the caterpillar were used.

In other words, when two wheels use it was much more difficult, than used by three legs for the foot pan or more than two wheels.

This applicant has applied for the invention of the walker, which installed the caster and kept a slidably stabilizing plate at the bottom of the frame body under Japanese patent application JP 7-236670, and in order to correct the above-mentioned inconvenient Situation, as an example, to move with stability inside of a building that is abundant in traversing obstacles such as the edge of a tatami-mat or some other kind of threshold, especially in the walker, which a handicapped person uses at home to travel over steps which obstruct it, and due to its instability will fall down due to a rotation of wheels.

And this applicant has applied for the caster of which a slidably stabilizing plate for traveling over a step with stability was kept as Japanese patent application JP 9-92722.

And this applicant has applied for the caster, which has a slidably stabilizing plate of which, the cross area touching the ground is variable due to the adjustable movement of a slidably stabilizing plate back and forth, up and down and a change in an angle as Japanese patent application JP 10-98084, based on Japanese patent application JP 9-92722 as a domestic priority.

Though there is JP 64-44301's official report as an example of the existent caster, when this caster runs with rolling on top of a flat surface of a road in the same way as the existent caster, the purpose of it is the assistance to use the existent caster for traveling over installation steps which obstruct it by keeping only the sled in the part in front of the caster.

And the purpose of it is to control of the proceeding direction of a sled and a caster into the proceeding direction in order that traveling over a step may not become impossible by pivoting of the caster.

At the same time, the realization is attempted by the stopper, which secures a sled material to be set up in order to run with rolling on top of the flat surface of the road.

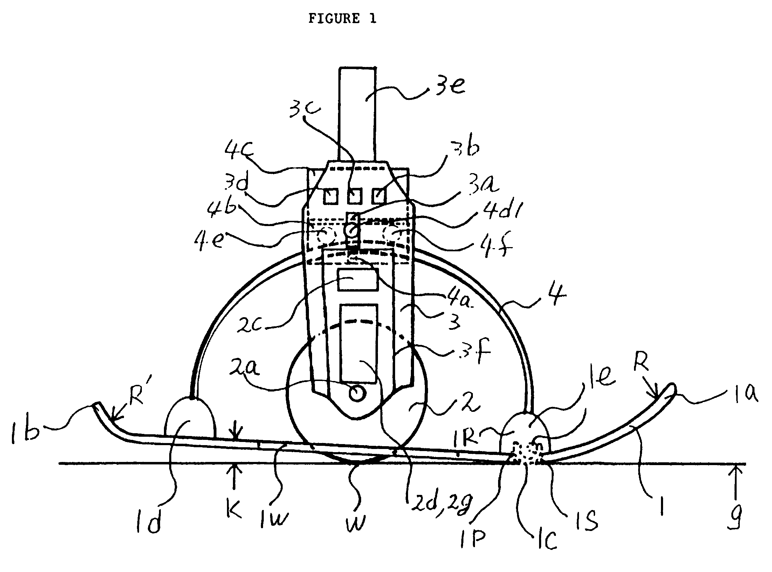

The purpose of JP 64-44301's official report is as mentioned above, then it is mentioned in the execution example that the drive power is kept by the other wheel, which isn't mentioned in figure 1 of quotation example 2.

In comparison with caster (JP 64-44301) of the official report, that this invention applies enhanced stability by setting up the gross area touching the ground in a slidably stabilizing plate, controls the acceleration of the caster by making friction variable because of making the gross area touching the ground change, and is to be able to stand on a caster by itself because stability is enhanced by changing the loading point as the wheel moves.

And, though there is the request of Japanese Utility Model Application 50-140166's official report as an example of the existent caster, it is composed of the link where it is attached to the bottom of the weight body, a wheel attached to the middle part of the link and the fixing device which fixes the end of others on the bottom with an adjustable distance.

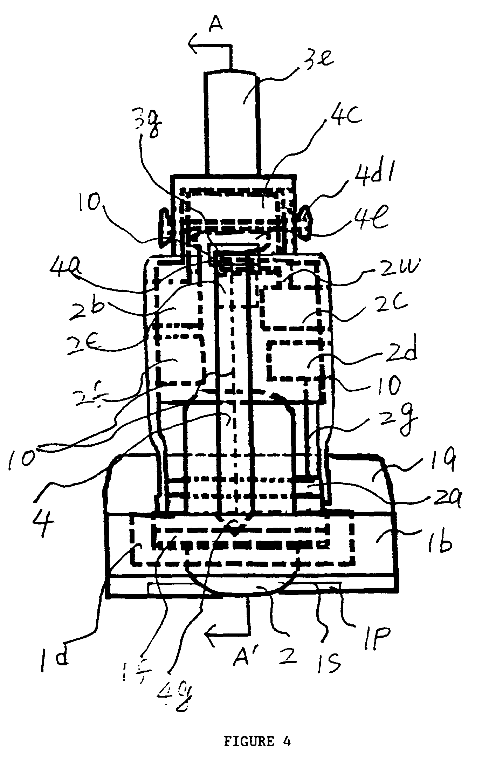

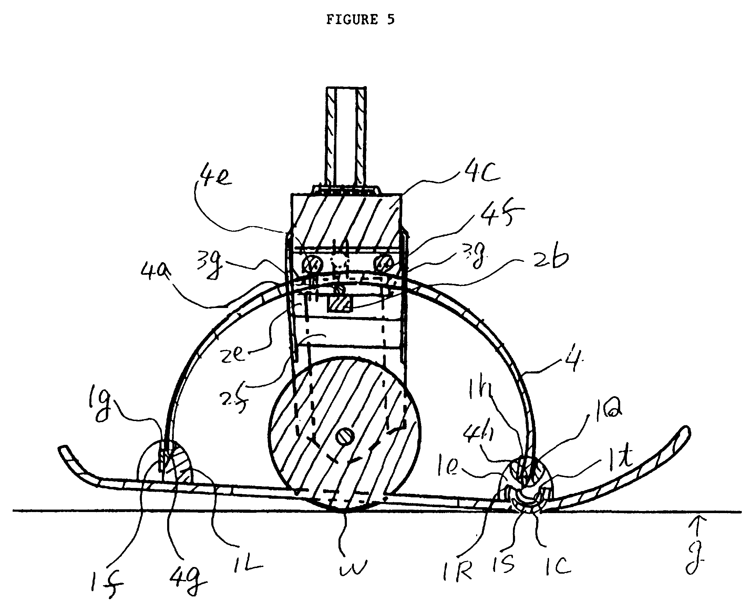

When figure 1 of the official report all the figures from figure 4 to figure 6, which show an execution example being examined, it is considered that the caster of the request of Japanese Utility Model Application 50-140166's official report its aims at lifting the weight body to the height desired.

In comparison with the caster of the request of Japanese Utility Model Application 50-140166's official report which is combined with other structure s after stability was enhanced and high stability was secured by being used to fix the fixed-type foot shaft to attach a item in the specific place after putting a weight thing on the regular position and lifting a wheel, this invention applies a really different idea from the caster of the request of Japanese Utility Model Application 50-140166's official report, because of enhanced stability by making a slidably stabilizing plate which is designed for the gross area touching the ground and then to control the acceleration of the caster by making friction variable due to the gross area touching the ground while being changed or to control the pressure which the touching part to the ground of a slidably stabilizing plate takes with being changed or to control the form of the touching part to the ground of a slidably stabilizing plate by being changed, and enhances stability by changing the loading point due to moving a wheel in front and back while maintaining its function as a wheel.

This invention applied is a new invention because there is a difference in each element that both standing on itself by one wheel and making a movement are available.

In the invention of JP 7-236670 by this inventor applied, the wheel has the function which makes friction between a slidably stabilizing plate and the walk surface minimal, makes the movement of the walker smooth and makes a walk smoothly due to wheel touching a walk surface and rotating by the lower part of a rolling surface of the wheel facing a little on the walk surface easily from the hole established in a slidably stabilizing plate.

As mentioned above, as for the wheel facing a little on the walking surface touching easily, there is neither idea of the front and back movement and the up-down movement nor idea to control the change of acceleration by making the gross area touching the ground of the slidably stabilizing plate adjustable due to the movement of the position of the wheel.

However, though there are descriptions of shaping a part at the bottom of the slidably stabilizing plate in touching the ground area and of eliminating the inconvenience of friction that is so great that a direction change and a side movement cannot be performed easily, there is not any idea of how to control the change of variable acceleration by controlling friction due to the gross area touching the ground of the slidably stabilizing plate adjustable.

This invention can control acceleration by making friction variable due to its ability to make the gross area touching the ground of the slidably stabilizing plate adjustable so that a slidably stabilizing plate can make the gross area touching the ground of the slidably stabilizing plate adjustable, the slidably stabilizing plate can make a gross area touching to the ground of the slidably stabilizing plate which can control acceleration adjustments by making friction variable, and at the same time in the condition that an angle of inclination of the slidably stabilizing plate is unchanged, friction of the slidably stabilizing plate to the ground area is made to change in the condition that the slidably stabilizing plate and the wheel is touching the ground area, and then to change the touching pressure of the ground of the slidably stabilizing plate into the condition that a wheel doesn't touch the ground area due to the change of the angle of inclination of the slidably stabilizing plate, and also to be able to keep the propulsion device which can change an angle of inclination of the slidably stabilizing plate and if an angle of inclination of the slidably stabilizing plate is changed, it is detected by the detection device, this invention realizes as a new idea, characteristics for outputting detection data for detecting changes in the angle of inclination of the slidably stabilizing plate.

### The Disclosure of the Invention

This invention is composed of a slidably stabilizing plate which can change an angle of inclination, a stably supporting leg composed on the slidably stabilizing plate, a rocking shaft which connects to a wheel and an upper object, which has an angle of inclination in the space from the front to the back and can rock on the slidably stabilizing plate and the wheel.

The slidably stabilizing plate mentioned above could be shaped by the material which has a flexible quality, and when the material, which has a flexible quality forms the slidably stabilizing plate, a gross area of the slidably stabilizing plate touching to the ground can be changed.

And also a friction varying material can be set up in the slidably stabilizing plate. The friction can he varied due to the friction varying material mentioned above.

A touching pressure to a ground, which the touching part to the ground of the slidably stabilizing plate receives, can be varied.

It is possible to keep the propulsion device which can change an angle of inclination of this slidably stabilizing plate, to keep the detection device for an angle of inclination of this slidably stabilizing plate changing and to output the detection data detected by the detection device mentioned above for changes in the angle of inclination of this slidably stabilizing plate.

It is possible that the rocking shaft mentioned above is rocked from the front to the back in the space on the slidably stabilizing plate, to keep the propulsion device which can change an angle appearing to turn the rocking shaft, to keep the detection device of the rocking shaft mentioned above rocking and to output the detection data detected by the detection device mentioned above.

The wheel mentioned above which is arranged in the hole established in the slidably stabilizing plate mentioned above can be moved in this hole to the front-back direction. And also it can be moved to the up-down direction.

It is possible that either of the first up side flange on the tip side and the second up side flange on the aft side of the slidably stabilizing plate mentioned above is shaped.

It is possible that the first up side flange mentioned above is shaped roughly 1 3 of the entire length of the slidably stabilizing plate mentioned above and the second up side flange can be shaped by a smaller radius than the first upside flange mentioned above.

The slidably stabilizing plate mentioned above is available to maintain an angle of inclination in the left-right direction and to shape an angle of inclination can be changed.

### Brief Description of the drawings

Figure 1 is the desirable caster for the robot; namely it is the side view which shows important parts of the first execution example.
Figure 2 is the slope figure, which shows important parts in the same way.
Figure 3 is the ground plan, which shows important pans in the same way.
Figure 4 is the rear figure which shows important pans in the same way.
Figure 5 is the A-A' cross section which is shown in figure 4.
Figure 6-1, figure 6-2 and figure 6-3 are the side views, which show the conditions of the touching part to the ground of a slidably stabilizing plate for the explanation.
Figure 7-1 and figure 7-2 are the side views, which show the conditions of the touching part to the ground of the wheel for the explanation.
Figure 8-1 and figure 8-2 are the rear figures, which show the conditions of the touching part to the ground for the explanation.
Figure 9 is the bottom figure, which shows the bottom of the desirable caster for the robot in this invention.
Figure 10 is the side view, which shows the important parts of the desirable caster for the robot in the other execution example of this invention.
Figure 11 is the slope figure, which shows the important pans in the other execution example in the same way. It is the side view, which shows the second execution example of this invention.
Figure 12 is the general idea figure of the wheel is computed, the size of which has the distance between two points of which the touching part to the ground of the big wheel and the first point to touch a obstacle are presumed.
Figure 13 is a control circuit in the first execution example.
Figure 14 is the flow chart when the connections of a propulsion device and a slidably stabilizing plate and a propulsion device and the rocking shaft are being cut in the first execution example.

### Description of the Preferred Embodiments

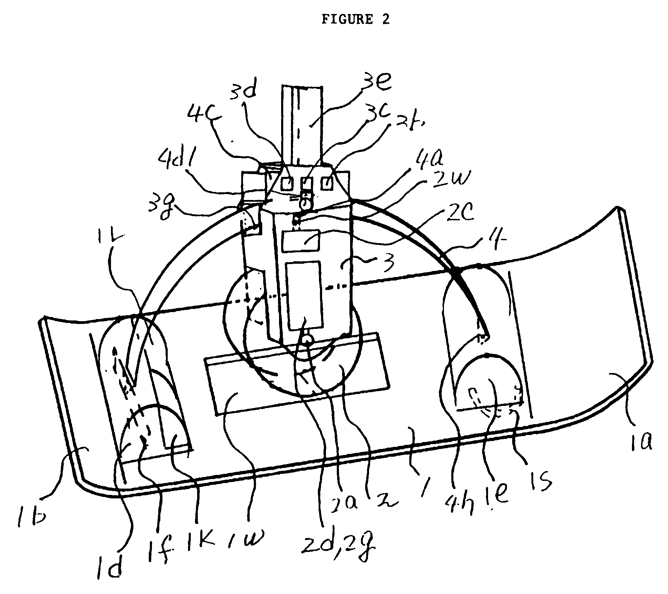

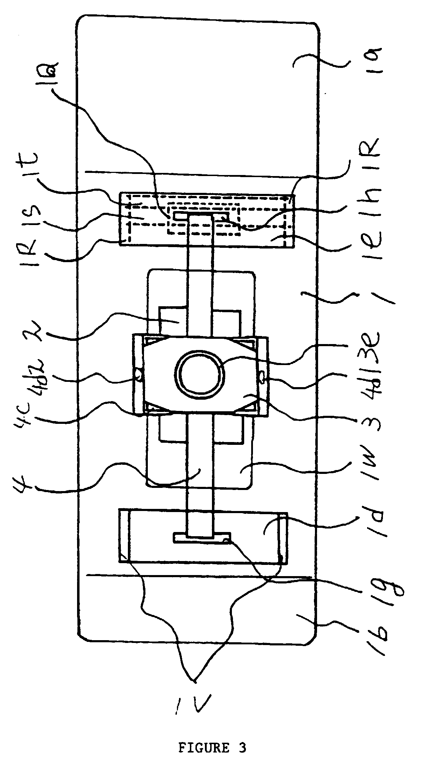

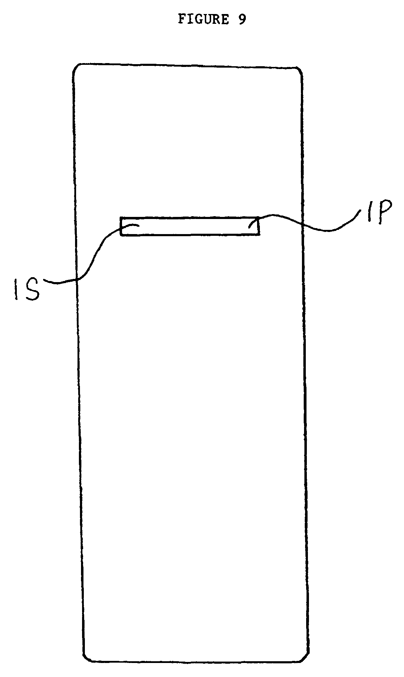

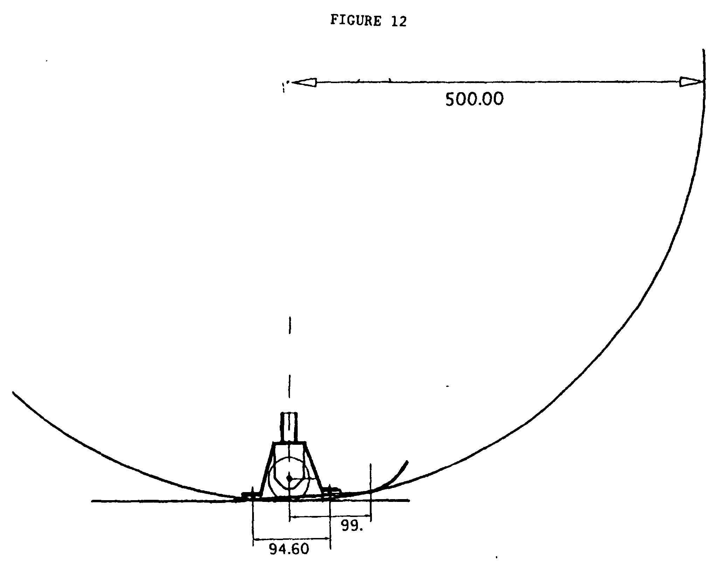

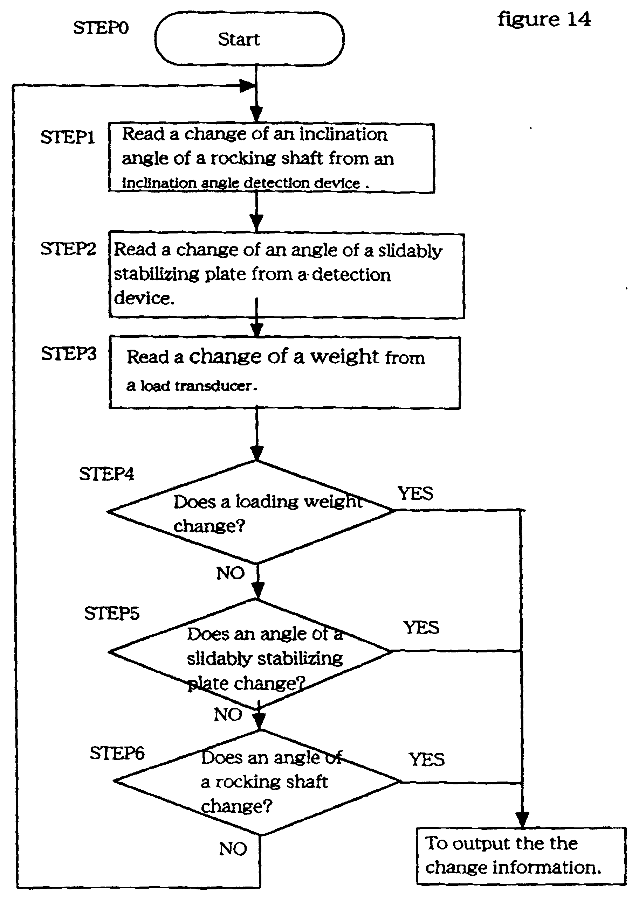

The first execution example, which is a desirable caster for the robot, is described in accordance with figures attached from figure 1 to figure 9 and from figure 12 to figure 14 so that this invention in detail is described.

A slidably stabilizing plate (1) is used and shaped materials for example like strengthening plastics or metals such as a steel and else, and it has the first up side flange (1a) which the tip side is raised in a big bend radius (R) to roughly 1/3 of the entire length, and it has the second up side flange (1b) which had a bend radius (R') which has a smaller bend radius than the up side flange (1a) in the aft side, and the first up side flange (1a) mentioned above is shaped under the condition that it is rising from transit plane (g) based on the touching part to the ground (1c) of the slidably stabilizing plate (1) and then the slidably stabilizing plate (1) shaped like raising in the back from the touching part to the ground (1c) some degrees of an angle of inclination to the back (K) by roughly the angle of three degrees for an example.

In this execution example, the stably supporting leg (4) of which the center is the touching part of the wheel to the ground (w) is roughly the semi-circle which made a distance to the rotation transmission device (4a) a radius, and then it is the composition which can rotate freely to make the angle of the stably supporting leg (4) change.

It is the composition, which can rotate freely to make the angle of the rocking shaft outside cover (3) change at the same time.

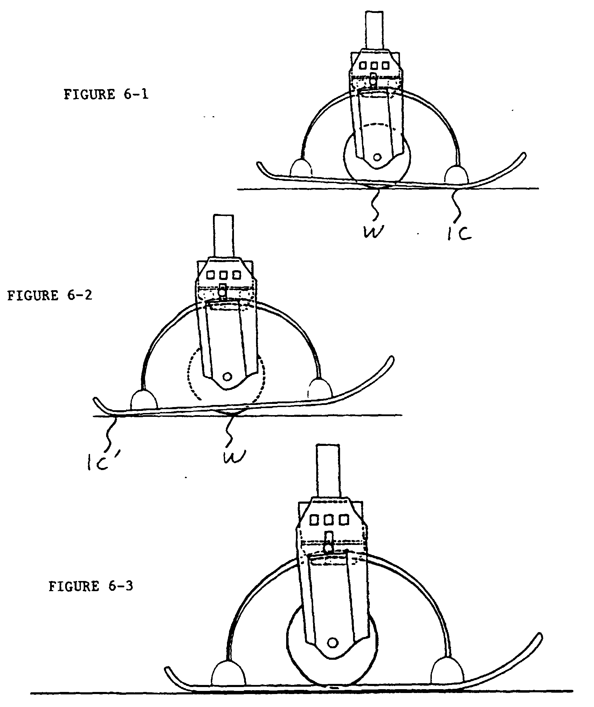

The slidably stabilizing plate (1) is shaped rotating around the touching part of the wheel to the ground (w) as a pivot as in figure 6-1, figure 6-2 and figure 6-3 are shown, and though some degrees of an angle of inclination to the back (K) could be set up by the distance of the touching part of the wheel to the ground (w) and the touching part to the ground (1c), for example it was made roughly the angle of three degrees as for this execution example.

This angle is to realize effect as a big wheel which figure 12 shows depending on the distance from the touching part of the wheel to the ground (w) to the backward touching part to the ground (1c') and the height of the wheel in future 6-2 shown, and it is good if the touching part to the ground (1c) or the backward touching part to the ground (1c') is set up in the case of the fixed angle in order that the control of the speed by the pressure may be made by changing the angle of a slidably stabilizing plate.

When the slidably stabilizing plate touches the ground, a wheel rises from the ground due to a much stronger rotation pressure being increased, so that all the driving force by the wheel becomes nothing, and it means the pressure or the friction at the touching part to the ground (1c) and at the same time the pressure and the friction dictates the strength of the braking power.

Though it isn't illustrated, it is the same as for the backward touching part to the ground (1c') as well.

Especially figure 6-3 as the assumption figure, which pulled up a wheel after the slidably stabilizing plate became parallel to the transit plane, therefore the stability in proportion to the size of the area at the bottom of a slidably stabilizing plate is provided.

The braking of the caster becomes possible by changing the angle of the slidably stabilizing plate in this way.

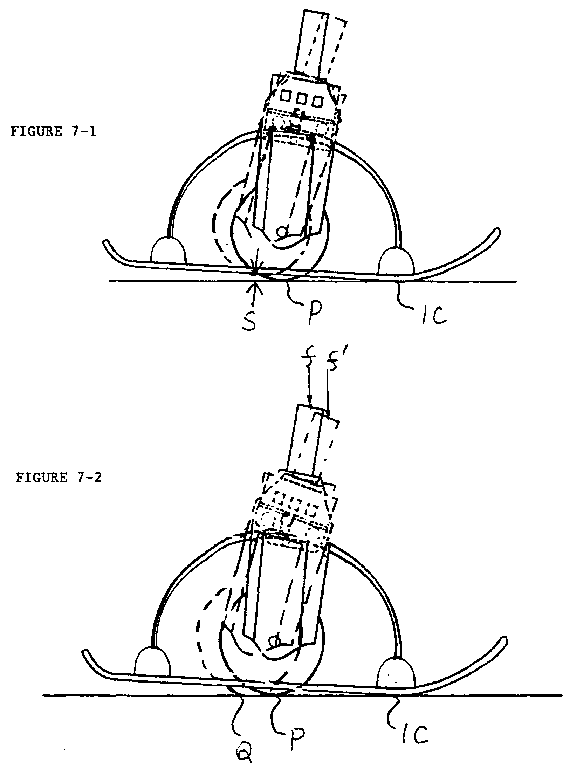

Figure 7-1 and figure 7-2 show the condition that a rocking shaft rocks, then when the stably supporting leg rocking shaft installation screws (4d1, 4d2) were made in the center of rocking, the position of the wheel can be changed in front and back depending on the rocking of the rocking shaft.

When the wheel was further moved from the touching part of the ground of the wheel (p) which was located by the movement in front and back depending on rocking the rocking Shaft under the sloped rocking shaft, the space (s) between the touching part to the ground of the wheel under the sloped rocking shaft and the point of the touching part to the ground or the wheel moved is displayed as shown in figure 7-1.

By this, when the rotation pressure is increased much more to the rocking shaft, a wheel rises, therefore all the driving force by the wheel becomes nothing, at the same time that the pressure in the touching part to the ground (1c) or friction and the pressure of the friction prescribes the strength of the braking power.

And also an up-down movement of a rocking shaft or a wheel is necessary so that the touching part to the ground of the wheel (q), which moved under the sloped rocking shaft which was located by the movement in front and back caused by rocking of the rocking shaft from the touching part to the ground of the wheel (p) under the sloped rocking shaft that touches the ground.

The loading point by rocking of the rocking shaft can be moved between the touching part to the ground of the wheel (p), under the sloped rocking shaft and the touching part to the ground (1c), like loading shaft (f) and loading shaft moved (f') show as figure 7-2.

As for this execution example, though it isn't shown, the movement of the loading point is detected and it can be outputted.

Even if a wheel is being fixed in the touching part of a wheel to the ground (w), which is shown in figure 6-1, figure 6-2 and figure 6-3, the loading point can be moved between the touching part to the ground (w), under the sloped rocking shaft and the touching part to the ground (1c).

And also the slidably stabilizing plate (1) is shaped roughly the size of the width 10cm, the length 28cm, and a thickness 5mm due to planning for the stability of the movement.

The hole (1w) which is set up roughly in the center of the bottom of the slidably stabilizing plate (1) is set up like the bottom of the wheel, the wheel (2) which is kept by using the axle (2a) with the rocking shaft outside cover (3) which maintains free rotation in the stably supporting leg (4) and goes through the hole (1w), meets the touching part of the wheel to the ground (w).

Both the maintenance device (1e) which is mid-air inside on the upper surface of the first up side flange (1a) and then the rectangular maintenance device opening part (1h) is set up, of which size is such that the stably supporting leg (4) mentioned can be swung right and left, roughly in the center of the maintenance device (1e), and the rectangular maintenance device opening part (1g) is set up, of which size is that the stably supporting leg (4) mentioned can be swung right and left, roughly in the center of the maintenance device (1d), which is mid-air inside and of which the cover (1v), which can both open and close a side is set up on the upper surface of the second up side flange (1b) are set up as an complete unit of the slidably stabilizing plate (1).

The stably supporting leg (4) goes through the maintenance device opening part (1h) in front and goes through the maintenance device opening part (1g) in the back.

The stably supporting leg (4) which went through the maintenance device opening part (1g) is installed in the slidably stabilizing plate angle detection device (1f), and then is joined in left-right free rotation on the bottom of the maintenance device (1d), namely on the surface of the slidably stabilizing plate (1) and at the stably supporting leg installation part (4g).

The stably supporting leg (4) which went through the maintenance device opening part (1h) is joined in left-right free rotation at the stably supporting leg installation part (4h), which is joined to the load transducer (1Q), which is suspended from the top of the maintenance device (1e).

Both the battery storage part (1L), and the side part up-down adjustable motor (1k) are set up in the maintenance device (1d).

The rotation by the side part up-down adjustable motor (1k) is communicated to the a stably supporting leg installation part (4g) and then moves the slidably stabilizing plate (1) up and down.

Due to the slidably stabilizing plate (1) being rotated by the side part up-down adjustable motor (1k) in the pivoting of both the stably supporting leg installation part (4g), and the stably supporting leg installation part (4h), the angle of the slidably stabilizing plate (1) can he changed by the up and down sideways motion of the rocking shaft (3e).

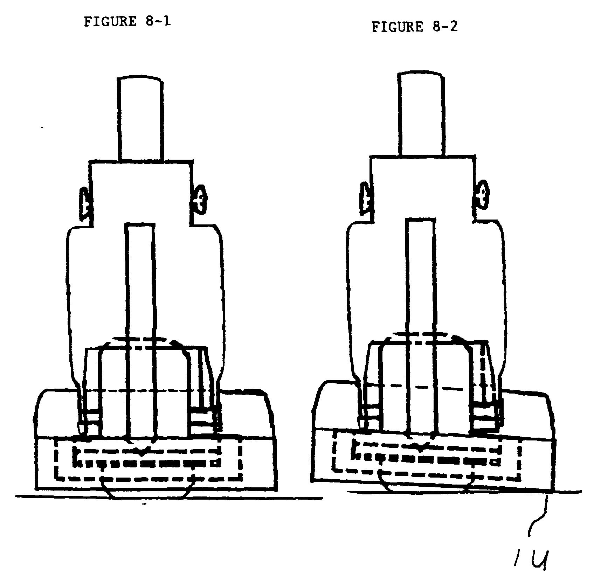

When there is not the up-down movement function of either the slidably stabilizing plate or the wheel in the caster for the robot, in the case of it being located in the parallel position of the transit plane (g) due changing the angle of the slidably stabilizing plate (1) sideways motion, the slidably stabilizing plate (1) is designed that the touching part to the ground (1u) of the slidably stabilizing plate (1) can be configured as in figure 8-2 shows from the condition of only the wheel touching the ground as the existent caster as figure 8-1 shows.

High stability can be maintained due to the side's entire length of the touching part to the ground (1u) of the slidably stabilizing plate (1) touching the ground in figure 8-2.

Though the position of the wheel can change up and down in the first execution example, even when it doesn't change up and down high stability can be realized due to changing the angle of the slidably stabilizing plate (1) up and down in the sideways motion like both figure 8-1 and figure 8-2 are defined.

A friction varying material maintenance part (1R) is set up respectively on both sides (left-right position) of the maintenance device (1e) mentioned above, and then by securing both sides to the friction varying material maintenance part (1R) mentioned above, a friction varying material (1s) goes through the opening part for friction (1p) and touches the ground at the touching part to the ground (1c) of the slidably stabilizing plate (1).

The friction varying material (1s) mentioned above, which for example, materials such as a strengthening plastic or such as a metal as a steel and else is used, is molded in a half-circular arc-shaped, and the length is the length that can be stored in the maintenance device (1c) mentioned above, and one side of the slidably stabilizing plate (1) has the smooth surface where friction is little, and for example one other side is shaped by the part which has a file-shaped surface, and due to rolling, the friction varying material (1s) mentioned above is composed in order to touch the ground in the touching part to the ground (1c) of the slidably stabilizing plate (1) through the opening part for friction (1p).

When the strong frictional part of the friction varying material (1s) mentioned above touches the ground in the touching part to the ground (1c), strong friction can be achieved and the speed is slowed down.

When the low friction part of the friction varying material (1s) mentioned above touches the ground in the touching part to the ground (1c), it plays little influencing the speed to proceed, due to little friction realized by the surfaces touching each other smoothly.

Changing the friction part of the friction varying material (1s) like this can slow the speed down.

A friction varying material drive part (1t) is kept by a friction varying material maintenance part (1R), and it is the propulsion device made to turn a friction varying material (1s).

As for this execution example, it is a motor and electric power is supplied by a battery storage part (1L).

Anything of this propulsion device is good if the friction varying material (1s) can be moved.

Though a maintenance device (1d) and a maintenance device (1e) were designed as a complete unit of the slidably stabilizing plate (1), it is also good that it is not all one complete unit.

The wheel (2), the touching part to the ground (w) of the wheel bottom of the wheel (2) mentioned above meets the transit plane (g), is supported by the stably supporting leg (4), the rocking shaft outside cover (3) and the axle (2a) of the wheel (2) in the position where it went through the hole (1w) mentioned above, and at the back side of the touching part to the ground (1c) of the slidably stabilizing plate (1) positioned roughly at the bottom of the first up side flange (1a) of the slidably stabilizing plate (1).

The rocking shaft outside cover (3) mentioned above, a wheel (2) and an axle (2a) can accommodate a motor, an engine, a drive mechanism such as a magnetic drive mechanism, as for this invention, a battery (2c) and a motor (2d) and the power transmission device (2g) are being used.

And also it can be driven by external electrical power.

The rocking shaft outside cover (3) is used and shaped materials for example like strengthening plastics or metals such as steel and else to keep both the wheel (2) and the stably supporting leg (4).

The rocking shaft outside cover (3) is made a mid-air structure which is divided so that a battery (2c), a motor (2d), a power transmission device (2g), a rocking shaft inclination angle detection device (2b), the motor (2w) that provides the power to change an angle of inclination of the slidably stabilizing plate (1) held by the stably supporting leg (4), the rotation transmission device (4a) which changes an angle of inclination of the slidably stabilizing plate (1) mentioned above and an angle of inclination of the rocking shaft outside cover (3) to the slidably stabilizing plate (1) according to make the stably supporting leg (4) mentioned above rotate by getting the power to change an angle of inclination of the slidably stabilizing plate (1) from the motor (2w), the up-down movement adjustment device (4c) which expands and shrinks up and down by oil pressure to get from the oil pressure pump (2e), the up-down movement part (4b) to go up and down caused by up-down movement of the up-down movement adjustment device (4c) which expands and contracts up and down by oil pressure from the oil pressure pump (2e), the stably supporting leg rocking shaft installation screws (4d1, 4d2) that joins the rocking shalt outside cover (3) mentioned above and the up-down movement part (4b) mentioned above in order that the up-down movement part (4b) can be moved up-down, the control device (2f) and the stably supporting leg stable device (4e) and the stably supporting leg stable device (4f) that keep the stably supporting leg (4) mentioned above in the moved position where it is rotated by the rotation transmission device (4a) mentioned above and then to have changed a position by oil pressure to get from the oil pressure pump (2e) can be stored, and roughly is made a rectangle, and is shaped with the strengthening plastic or the metal and so on, and is shaped by the material which can support the load of the object such as a utensil or a structure from the rocking shaft (3e), and the hole (3g) which size doesn't obstruct the up-down movement of the stably supporting leg (4) is opened respectively in the front side and the rear side so that the stably supporting leg (4) can go through, and the up-down movement adjustment hole (3a) is opened in the side, and the outside information input terminal (3b), the outside electric power introduction terminal (3c) and the outside information output terminal (3d) are shaped on the upper side of the up-down movement adjustment hole (3a) mentioned above, and the structure that the slidably stabilizing plate (1) can be installed through the stably supporting leg (4) is made.

Though the strengthening rib (3f) strengthens the rocking shaft outside cover (3), it isn't necessarily necessary.

Though the outside electric power introduction terminal (3c) is for the electric power in order to use a motor, it can be changed by the kind of the power source.

Though both the outside information input terminal (3b) and the outside information output terminal (3d) set up the jack for 2 line, any form such as 10Base-T is good.

Though the function of the up-down movement adjustment device (4c), the stably supporting leg stable device (4e) and the stably supporting leg stable device (4f) are realized by the oil pressure, anything that the capacity is variable such as water pressure or air pressure is good in order that the volume be adjustable.

Though the thing to move up and down is set in this execution example, even when it doesn't move up and down as mentioning above, it is also possible that the device concerned with the up-down movement isn't installed, because the purpose of this invention can be realized by changing pressure to give to the transit plane (g) through the touching part to the ground (1c) from the slidably stabilizing plate (1).

For example, the stably supporting leg (4) by using materials like strengthening plastics or metals such as a steel and else is the circular arc made a radius to the rotation transmission device (4a) as the touching part of the wheel to the ground (w) at the wheel's pivot point under the condition that a rocking shaft (3e) stands upright, as for this execution example, though it is shaped so that it can rotate exactly due to the inside of the perimeter makes a file-shaped form, anything is good if it can transmit the rotation of the rotation transmission device (4a) exactly such as the gear structure and the structure of the chain-shaped and else, and then if it is the structure which can change an angle of inclination of the slidably stabilizing plate (1) mentioned above and an angle of inclination of the rocking shaft outside cover (3) toward to the slidably stabilizing plate (1) mentioned above, which allows the stably supporting leg (4) to move.

The control device (2f) composed of the microcomputer and so on is connected with the outside information input terminal (3b), the rocking shaft inclination angle detection device (2b), the slidably stabilizing plate angle detection device (1f) and the load transducer (1Q) in the input side through the data transmission network (10) and on the other hand connected with the outside information output terminal (3d), a friction varying material drive part (1t), the side part up-down adjustable motor (1k), the motor (2w),the rotation transmission device (4a), the motor (2d),the power transmission device (2g), the oil pressure pump (2e) and the up-down movement adjustment device (4c) in the output side through the data transmission network (10),
the rocking shaft inclination angle detection device (2b) uses an incline transducer.

The slidably stabilizing plate angle detection device (1f) uses an incline transducer.

The load transducer(1Q) evaluates weight changes and when there is a change, the change is outputted.

Both the friction varying material drive part (1t) and the side part up-down adjustable motor (1k) are motors.

Anything is good as a mechanism, so long as it can be driven.

The motor (2w) and the rotation transmission device (4a) is configured to make the stably supporting leg (4) rotate, therefore if the angle of the stably supporting leg can be changed, a motor and a rotation transmission device can be designed as an attachment to the outside housing, and also a rotation transmission device can be attached that can operated by hand.

A motor isn't necessarily needed.

A motor (2d) and the power transmission device (2g) are configured to drive a wheel (2), therefore a motor and a rotation transmission device can be designed as an attachment to the outside housing, and also a rotation transmission device can be attached that can operated by hand.

The oil pressure pump (2e) is designed to make the up-down movement adjustment device (4c) move up and down by the oil pressure and direct pressure to the stably supporting leg stable device (4e) and the stably supporting leg stable device (4f), but it isn't necessarily needed.

In the case, the top of the stably supporting leg (4), the stably supporting leg stable device (4e) and the stably supporting leg stable device (4f) are structures that are easy to turn because of their smooth structure, and also they can be secured in their stability while standing still, because there are both the stably supporting leg stable device (4e) and the stably supporting leg stable device (4f) at the top of the stably supporting leg (4).

For example, the stably supporting leg stable device (4e) and the stably supporting leg stable device (4f) press down the top of the stably supporting leg (4) powerfully by using some sort of spring.

Anything is good that the stably supporting leg (4) is easy to turn and also the structure can be secured in its stability even when standing still.

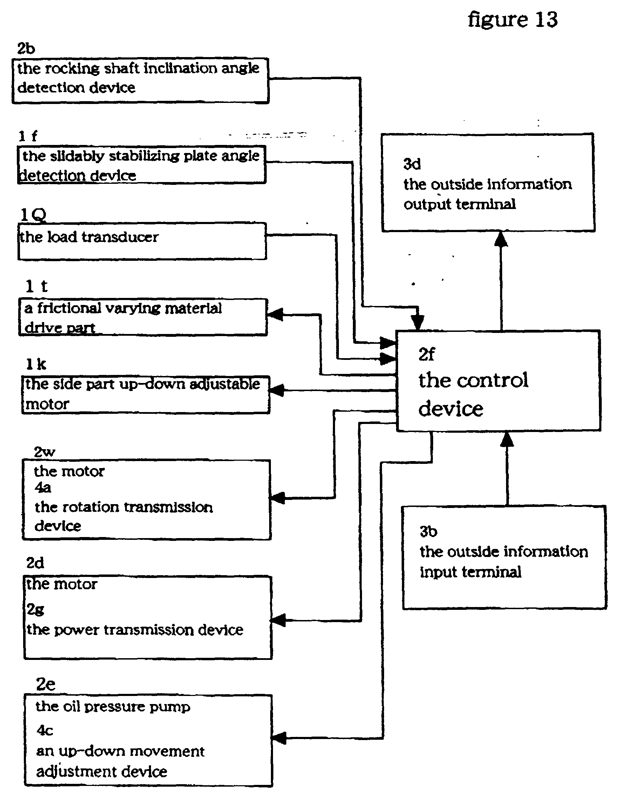

The top of the stably supporting leg (4), the stably supporting leg stable device (4e) and the stably supporting leg stable device (4f) are structures that are easy to turn with their smooth structure, and also they can he secured in their stability even when standing still provided there are both the stably supporting leg stable device (4e) and the stably supporting leg stable device (4f) at the top of the stably supporting leg (4), and for example, the stably supporting leg stable device (4e) and the stably supporting leg stable device (4f) press down the top of the stably supporting leg (4) powerfully by using some sort of spring, and if the stably supporting leg (4) is easy to turn and also the structure can be secured in its stability when standing still, then the control circuit which shows in figure 13 is composed, namely, the control device (2f) which composed of the microcomputer and so on, the data transmission network (10), the outside information input terminal (3b), the rocking shaft inclination angle detection device (2b), the slidably stabilizing plate angle detection device (1f), the load transducer (1Q), the data transmission network (10), the outside information output terminal (3d), the friction varying material drive part (1t), the side part up-down adjustable motor (1k), the motor (2w), the rotation transmission device (4a), the motor (2d), the power transmission device (2g), the oil pressure pump (2e) and an up-down movement adjustment device (4c) aren't necessarily needed.

At the same time, the friction varying material drive part (1t), the opening part for friction (1p) and the friction varying material maintenance part (1R) that is concerned with the friction varying material (1s) mentioned above aren't necessarily needed.

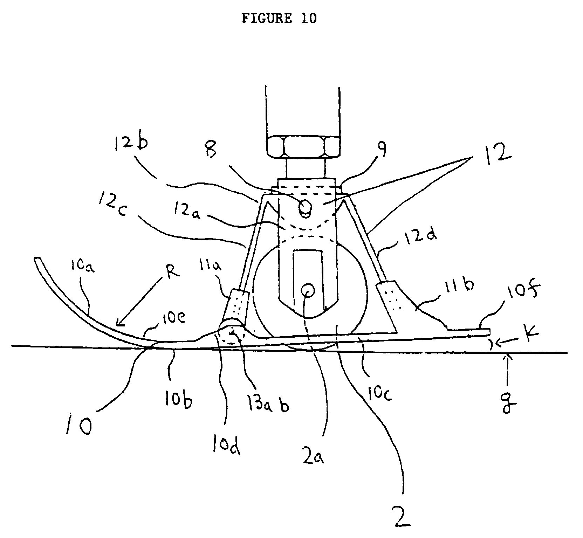

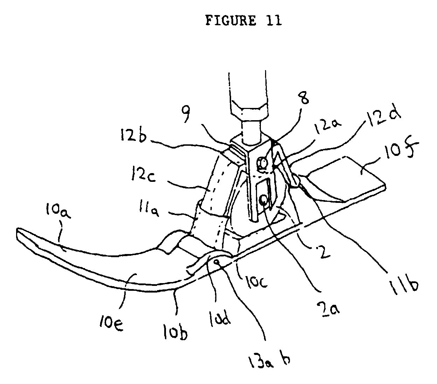

Figure 10 and figure 11 are shown the desirable caster for the robot of the other execution example in this invention.

To show in figure 10, the slidably stabilizing plate (10) is separated from the stably supporting leg (12a) and the stably supporting leg (12b) individually, and it is a slidably stabilizing plate which makes the form which is shaped the same as the slidably stabilizing plate (1) of the execution example mentioned before, namely, this slidably stabilizing plate (10) uses flexible materials for example, like a plastic or metals such as aluminum and else, and the first up side flange (10a) which a tip side is raised in a big bend radius (R) to roughly the 1/3 of the entire length, and also the first up-side flange (10a) is shaped under the condition that it rises from the transit plane (g) with the touching part to the ground of the slidably stabilizing plate (10b) of the slidably stabilizing plate (10) as starting point, and is shaped and sloped some degrees of an angle of inclination to the back (K) with the touching part to the ground of slidably stabilizing plate (10b) as starting point, for example, at roughly 3 degrees the slidably stabilizing plate (10) to the back is raised.

And also the slidably stabilizing plate (10) is shaped roughly the size of the width 10cm, the length 20cm and a thickness 5mm due to planning for the stability of the movement.

The hole (10c) which is set up roughly in the center of the bottom of the slidably stabilizing plate (10) is set up like the wheel (2) which is kept in the rotation freely in the a stably supporting leg (12b) and then which went through the hole (10c) mentioned above like the wheel bottom meets the transit plane.

The wheel (2) to show in figure 10 of which the wheel bottom meets the transit plane is supported by both the stably supporting leg (12a) and the axle (2a) of the wheel (2) at the back of the touching part to the ground (10b) of the slidably stabilizing plate (10) where the nearby bottom of the first up-side flange (10a) of the slidably stabilizing plate (10) touches the ground.

The stably supporting leg (12a), the wheel (2) and the axle (2a) can keep a motor, an engine and a drive mechanism such as a magnetic drive mechanism.

The stably supporting leg (12) to show in figure 10 is shaped by separating all the stably supporting leg (12a), the stably supporting leg (12b), the up-down adjustment screw (8), the adjustment part (9), the adjustment part (11a) and the adjustment part (11b).

In other words, the stably supporting leg (12a) mentioned above provides the mid-air structure that the wheel (2) can be stored, and then the side is roughly rectangular, and then the tip part of it makes a half-circle, and then it is shaped by the material which can support the load of the object such as a utensil or a structure by a plastic or metals and else, it is located astride the side of the stably supporting leg (12a) and strides over from the top of the stably supporting leg (12b), the stably supporting leg (12a) and the stably supporting leg (12b) are fixed by the up-down adjustment screw (8) and the adjustment part (9), the stably supporting leg (12b) and the slidably stabilizing plate (10) are fixed by the adjustment part (11a) and the adjustment part (11b), and it is shaped a lower part of a rolling surface of the wheel (2) which went through the hole (10c) opened in the slidably stabilizing plate (10) meets the transit plane (g) and touching a little.

In the execution example shown in figure 10, the slidably stabilizing plate (10) is fixed to the stably supporting leg (12b) mentioned above by both the adjustment part (11a) and the adjustment part (11b), and then both the stably supporting leg (12a) and the stably supporting leg (12b) mentioned above are fixed by the up-down adjustment screw (8) and the adjustment part (9), both of the stably supporting leg (12a) and the stably supporting leg (12b) are shaped as one set.

The slidably stabilizing plate (10) is fixed to the stably supporting leg settlement pan (12c) which has the structure of the hinge by the adjustment part (11a) and is fixed to the stably supporting leg settlement part (12d) by the adjustment part (11b).

The slidably stabilizing plate (10) arranges a hinge carrier (10d) on the slidably stabilizing plate surface (10e) in order to fix to the stably supporting leg settlement pan (12c) by the adjustment part (11a) which has the structure of the hinge.

The adjustment part (11a) is fixed to the hinge carrier (10d) by using the shaft (13a) of the hinge and the shaft stop (13b) in order to fix to the slidably stabilizing plate (10) in the position of the hinge carrier (10d) and the stably supporting leg (12b) mentioned above by the stably supporting leg settlement part (12c) mentioned above and the adjustment part (11a).

The stably supporting leg settlement part (12c) and the adjustment part (11a) mentioned above can be installed with control devices that use oil pressure, air pressure, water pressure, a spring, a wire, an electromotive style or the magnetic power.

The adjustment part (11a) can make the slidably stabilizing plate (10) adjustable in the front and back based on the movement of the slidably stabilizing plate (10) by the adjustment of the adjustment part (11b) from the hinge carrier (10d) as the starting point.

The adjustment part (11b) is an up-down variable movement pressure device and is the control device in which oil pressure, air pressure, water pressure, a spring, a wire, an electromotive style or magnetic power is used.

The adjustment parts (11a, 11b) mentioned above could be an up-down variable movement pressure device which a pressure sensor was incorporated into.

When an adjustment part (11b) moves to an up-down variable, it enables the slidably stabilizing plate (10) to be moved to the front and back variable such that when the end part (10f) of the slidably stabilizing plate (10) touches the ground in the transit plane (g), friction can be controlled by its gross area touching the ground by its amount of increase and decrease, therefore, it can brake without controlling the movement of the wheel by the mechanism, such as the brake which controls the wheel of the existent caster and the axle which holds the wheel for braking.

In the execution example shown in figure 10, the slidably stabilizing plate (10) is a complete unit with the adjustment part (11b) due to it being fixed to the stably supporting leg settlement part (12d) by the adjustment part (11b).

However, the slidably stabilizing plate (10) can be also made as a separative structure from the adjustment part (11b).

When the slidably stabilizing plate (10) and an adjustment part (11b) were made a separate components, the slidably stabilizing plate (10) and the adjustment part (11b) are fixed by the means of a screw stop, glue and weld.

The adjustment part (11a) is fixed to the slidably stabilizing plate (10) by the hinge carrier (10d) at the position of the hinge carrier (10d) on the slidably stabilizing plate surface (10c) in order to fix the stably supporting leg (12b) mentioned above by the stably supporting leg settlement part (12c) which has the structure of the hinge and the adjustment part (11a).

The stably supporting leg settlement part (12c) and the adjustment part (11a) mentioned above, can be installed with a control device that uses oil pressure, air pressure, water pressure, a spring, rubber, a wire, an electromotive style or magnetic power.

The wheel bottom meets the transit plane from the hole of the slidably stabilizing plate mentioned above, the wheel is fixed to the stably supporting leg rotating freely, and the wheel mentioned above which is held by the stably supporting leg can change the amount of the gross area touching the ground of the slidably stabilizing plate increase and decrease due to the up-down movement, and also by a drive mechanism that can be designed.

Anything is good for the drive mechanism mentioned above, such as an engine, a motor, a magnetic propulsion device or nuclear energy.

In the execution example to show in figure 10, because the slidably stabilizing plate (10), namely, the slidably stabilizing plate (10) and the adjustment part (11b) can be a complete unit and (his means that others, the stably supporting legs (12a), the stably supporting leg (12b), the adjustment part (11a), the up-down adjustment screw (8) and an adjustment part (9) are fixed to respectively as adopted, the friction can be controlled by the control device of the adjustment part (11a) and the adjustment part (11b), therefore, it was adopted that friction can be adjusted.

The adjustment part (9) of figure 10 is the material for the adjustment which can move the wheel (2) up and down properly, as illustrated, which lies between the stably supporting leg (12a) mentioned above, and the stably supporting leg (12b) mentioned above, as for the execution example, it is the rubber material which can be used as a shock absorber for the stably supporting leg (12a) mentioned above and the stably supporting leg (12b) mentioned above.

The adjustment part (9), which consists of the rubber material mentioned above, can be made a pressure device, such as air pressure and oil pressure.

The adjustment part (9) mentioned above, could be made with an up-down variable movement pressure device, where a pressure sensor would be included.

The adjustment part (9) mentioned above, could be made with a front and back variable movement pressure device, where a pressure sensor would be included at the same time.

The adjustment part (9), mentioned above can be shaped as a complete unit in either the stably supporting leg (12a) and the stably supporting leg (12b).

Figure 12 as shown is the general idea figure, which shows a large wheel as compared to a caster for a robot traveling over obstacles.

### Possibility of use in industry

This invention is the caster with a sled for traveling over obstacles, which can brake without controlling the movement of the wheel by the mechanism, such as the brake which controls the wheel of the existent caster and the axle which holds a wheel for braking, the stability is higher than the existent caster, namely, a caster for a robot, when a person moves a object, such as a utensil or a structure, whereas the existent caster has limitations in the size of the wheel of existent caster, it travels easier over obstacles, is suitable for indoor use, and furthermore, and is suitable for use as two pairs of feet in a walking robot, due to its strong stability with one caster with the sled for traveling over obstacles and two that can stand on its own.

## Claims

1. It is the caster of which a slidably stabilizing plate and a wheel touch the ground, the slidably stabilizing plate mentioned above, is shaped by the material, which has a flexible quality and slopes descending from the front and the back, and this angle of inclination of this slidably stabilizing plate can be changed, and it has characteristics that the caster can make a gross area of the slidably stabilizing plate that touches the ground change by changing the angle of inclination of the slidably stabilizing plate in the condition, which the slidably stabilizing plate and a wheel touch the ground.

2. It is the caster of which a slidably stabilizing plate and a wheel touch the ground, the slidably stabilizing plate mentioned above, is shaped that an angle of inclination of this slidably stabilizing plate can be changed between the angle at the position of the descent inclination to the front and the angle at the position of the descent inclination to the back, and the caster has characteristics to make the touching pressure to the ground of the touching part to the ground of a slidably stabilizing plate, change from the condition that the slidably stabilizing plate and a wheel are touching the ground to the condition that the slidably stabilizing plate is touching and a wheel is rising by changing an angle of inclination of the slidably stabilizing plate.

3. It is the caster of which a slidably stabilizing plate and a wheel touch the ground, the slidably stabilizing plate mentioned above is shaped that an angle of inclination of this slidably stabilizing plate can be changed between the angle at the position of the descent inclination to the front and the angle at the position of the descent inclination to the back, and the caster, it has characteristics to make the friction change due to the friction varying material set up in this slidably stabilizing plate without changing an angle of inclination of the slidably stabilizing plate in the condition which the slidably stabilizing plate and a wheel touch the ground.

4. It is the caster of which a slidably stabilizing plate and a wheel touch the ground, the slidably stabilizing plate mentioned above is a slidably stabilizing plate which is adjustable between the angle at the position of the descent inclination to the front and the angle at the position of the descent inclination to the back, and to make the friction of the slidably stabilizing plate to the ground area change by changing an angle of inclination of the slidably stabilizing plate in the condition that the slidably stabilizing plate and a wheel touch the ground, the caster according to claim 1, claim 2 and claim 3 mentioned, it has characteristics that a propulsion device which is adjustable for changing the angle of the inclination of the slidably stabilizing plate is set up.

5. It is the caster of which a slidably stabilizing plate and a wheel touch the ground, the slidably stabilizing plate mentioned above, is a slidably stabilizing plate which is adjustable between the angle at the position of the descent inclination to the front and the angle at the position of the descent inclination to the back, and in the condition that the slidably stabilizing plate and a wheel touch the ground, making a touching pressure to a ground of the slidably stabilizing plate variable by changing an angle of inclination of the slidably stabilizing plate, when an angle of inclination of this slidably stabilizing plate is changed, it is detected by the detection device, and the caster according to claim 1, claim 2, claim 3 and claim 4 mentioned, it has characteristics to output the detection data which detected a change in an angle of inclination of the slidably stabilizing plate

6. A hole is established in the slidably stabilizing plate mentioned above, a wheel is located in this hole, being composed of a stably supporting leg on a slidably stabilizing plate and a rocking shaft which combines an upper object and a wheel, it is possible that the rocking shaft mentioned above rocks from the front to the back to have an angle of inclination in the space on the slidably stabilizing plate, and the caster according to claim 1, claim 2, claim 3, claim 4 and claim 5 mentioned, it has characteristics to make the load to the slidably stabilizing plate mentioned above, and the wheel mentioned above, and the loading point change, by being possible to rock and to change the angle of the rocking shaft as in pivoting it.

7. A hole is established in the slidably stabilizing plate mentioned above, a wheel is located in this hole, being composed of a stably supporting leg, a slidably stabilizing plate and a rocking shaft, which combines an upper object and a wheel, it is possible that the rocking shaft rocks from the front to the back in the space on the slidably stabilizing plate, and the caster according to claim 1, claim 2, claim 3, claim 4, claim 5 and claim 6 mentioned, it has characteristics that the propulsion device which can change the angle of the rocking shaft like turning for making an angle variable in the touching part to the ground at the bottom of the wheel mentioned above at its pivot.

8. A hole is established in the slidably stabilizing plate mentioned above, a wheel is located in this hole, being composed of a stably supporting leg, a slidably stabilizing plate and a rocking shaft, which combines an upper object and a wheel, it is possible that the rocking shall rocks from the front to the back in the space on the slidably stabilizing plate, and the caster according to claim 1, claim 2, claim 3, claim 4, claim 5, claim 6 and claim 7 mentioned, it has characteristics to detect by the detection device when the rocking shaft mentioned above, rocks in turning this rocking shaft in the touching part to the ground at the bottom of the wheel mentioned above, to the pivot point, and to output the detection data of the change in an angle of inclination of the rocking shaft mentioned above.

9. A hole is established in the slidably stabilizing plate mentioned above, the wheel mentioned above is located in this hole, and the caster according to claim 1, claim 2, claim 3, claim 4, claim 5, claim 6, claim 7 and claim 8 mentioned, it has characteristics that the wheel is held by the stably supporting leg and moves in this hole in the front-back direction.

10. The caster according to claim 1, claim 2, claim 3, claim 4, claim 5, claim 6, claim 7, claim 8 and claim 9 mentioned, it has characteristics that the wheel mentioned above moves up and down in the hole of the slidably stabilizing plate mentioned above.

11. The caster according to claim 1, claim 2, claim 3, claim 4, claim 5, claim 6, claim 7, claim 8, claim 9 and claim 10 mentioned, it has characteristics that the first up-side flange the tip side and the second up-side flange on the aft side of the slidably stabilizing plate mentioned above is shaped.

12. The caster according to claim 1, claim 2, claim 3, claim 4, claim 5, claim 6, claim 7, claim 8, claim 9, claim 10 and claim 11 mentioned, it has characteristics that the first up-side flange mentioned above, is shaped roughly 1/3 of the entire length of the slidably stabilizing plate mentioned above, and the second up side flange is shaped by a smaller radius than the first up-side flange mentioned above.

13. The caster according to claim 1, claim 2, claim 3, claim 4, claim 5, claim 6, claim 7, claim 8, claim 9, claim 10, claim 11 and claim 12 mentioned, it has characteristics that the slidably stabilizing plate mentioned above, is available to keep an angle of inclination in the left-right direction and to be shaped that an angle of inclination can be changed.
